# EUROPEAN PATENT SPECIFICATION

(11) **EP 4 432 578 B1**
(45) Date of publication and mention of the grant of the patent: **06.05.2026**
(21) Application number: 23382232.9
(22) Date of filing: 13.03.2023
(51) Int. Cl.: H04B 7/185, H04W 4/90, H04W 16/14

(54) **HANDLING EMERGENCY SIGNALS IN A CELLULAR NETWORK**
HANDHABUNG VON NOTRUFSIGNALEN IN EINEM ZELLULAREN NETZWERK
GESTION DE SIGNAUX D'URGENCE DANS UN RÉSEAU CELLULAIRE

(43) Date of publication of application: 18.09.2024
(73) Proprietor: Vodafone Group Services Limited, Newbury, Berkshire RG14 2FN (GB)
(72) Inventor: GARCÍA VIÑAS, Aitor, 28042 Madrid (ES); GUEVARA VERA, Jose Francisco, 28042 Madrid (ES); DOMÍNGUEZ ROMERO, Francisco Javier, 28042 Madrid (ES)
(74) Representative: Boult Wade Tennant LLP

(56) References cited:
- WO-A1-2022/178797
- US-A1- 2010 015 971
- US-A1- 2019 355 237

## Description

### Technical Field of the Disclosure

The disclosure concerns handling an emergency signal to a first network operated as a non-terrestrial cellular network. The first network is operating on a same frequency as a second network, operated as a terrestrial cellular network. The disclosure can be implemented as a method, a computer program and/or a controller, for example.

### Background to the Disclosure

Cellular wireless communication networks provide wide geographical coverage by allowing user (mobile) terminals to access the network through a Radio Access Network (RAN) formed of cells, each cell having a specific geographical coverage area. In this context, a cell refers to a base station (RAN access node) having a cell identifier (Cell ID), for example as used in Third Generation Partnership Project (3GPP) standards. Coverage areas of cells may overlap and this may assist to avoid areas without coverage. Nevertheless, there are still certain areas without cellular wireless network coverage, for example where the deployment of cells is hazardous, difficult, costly or a combination of these. This may particularly occur in rural areas and developing countries.

Conventional cellular networks have been terrestrial (that is, with access nodes located on the Earth's surface). Non-terrestrial cellular networks have been proposed more recently, for example using a High Altitude Platform (HAP) to provide cells. This allows coverage on the ground as it would be by a typical (terrestrial) Mobile Network Operator (MNO) site, allowing access by the same user or mobile terminals supporting this RAN in the terrestrial networks, in particular using 4G or 5G. In this context, a satellite may be considered a type of HAP and this term includes any type of radio platform, typically operating above 20km in altitude and preferably at a specified, nominal, fixed point relative to the Earth. The term HAP as used herein should not be confused with the term "High Altitude Platform Station" used in the International Telecommunication Union (ITU) Radio Regulations, which has a narrower definition. A RAN provided by a HAP infrastructure involves complexities.

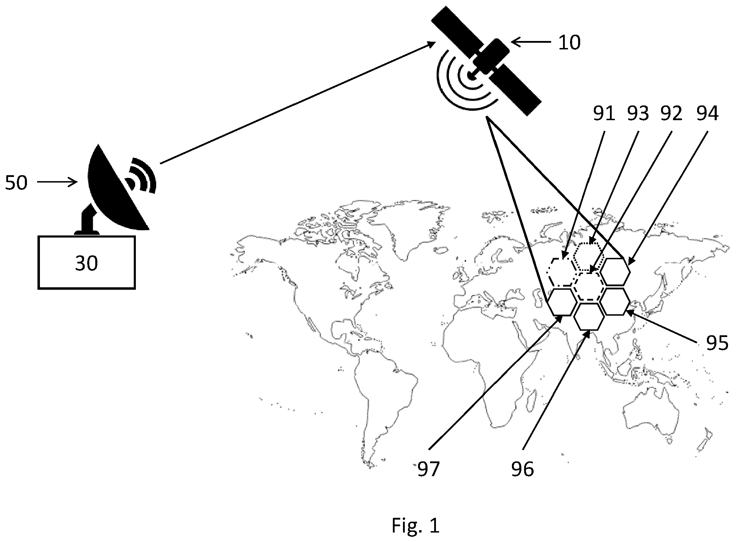

Referring first to Figure 1, there is shown a schematic architecture for an exemplary non-terrestrial cellular RAN, in this case provided through a satellite 10. The satellite 10 acts as a repeater between a baseband system 30 and the end users (for example, any SIM-based devices including mobile terminals, not shown). The baseband system 30 generates radio signals for transmission by the satellite 10 and also processes baseband signals received by the satellite 10. Thus, the baseband system 30 provides lower level base station functions (and may be virtualized or non-virtualized) and transmits one or more intermediate signals to the satellite 10. Each intermediate signal represents a baseband carrier signal for a respective cell, each carrier signal having a respective bandwidth. These are provided to a satellite gateway antenna unit 50, which acts as a mixer, multiplexer and ground station radio. The transmission frequency between the gateway antenna unit 50 and the satellite 10 is typically in the Ku-band or Q-band. The communication between the baseband system 30 and the HAP 10 is thereby made through the antenna 50. The intermediate signals (which for Long Term Evolution, LTE signals, also termed 4G, would be Orthogonal Frequency Division Multiplexed, OFDM, signals) are advantageously transmitted to the satellite 10 multiplexed in frequency. Each intermediate signal may thus define a respective carrier signal.

The satellite 10 transmits the radio signals using individual, respective beams. A first carrier may be transmitted using a first beam to provide a first coverage area 91 (the upper left area shown), a second carrier may be transmitted using a second beam to provide a second coverage area 92 (the central area shown), a third carrier may be transmitted using a third beam to provide a third coverage area 93 (the top area shown), a fourth carrier may be transmitted using a fourth beam to provide a fourth coverage area 94 (the upper right area shown), a fifth carrier may be transmitted using a fifth beam to provide a fifth coverage area 95 (the lower right area shown), a sixth carrier may be transmitted using a sixth beam to provide a sixth coverage area 96 (the lower central area shown) and a seventh carrier may be transmitted using a seventh beam to provide a seventh coverage area 97 (the lower left area). Communication between the satellite 10 and the end users is in the standardized 3GPP radio access bands. Each carrier signal is transmitted within a respective allocated frequency channel.

The satellite 10 is thereby capable of managing a large number of wireless network cells and they can be communicated (that is, transmitted and/or received) over specific areas through directive beams. However, the satellite 10 is limited in both power and bandwidth. The bandwidth limitation especially applies for the link between the satellite 10 and the antenna unit 50. The baseband dimensioning is directly linked to the number of cells to be processed. As a result, the total bandwidth available for transmission (and/or reception) by the satellite 10 in providing the RAN is limited. The same issues may apply whatever form of HAP is used.

Improvements to the operation of non-terrestrial networks of this type are discussed in EP3790202 and EP3783811. The association between cells and beams can adjusted. Additionally or alternatively, the bandwidth of a cell can be changed by establishing a second carrier of a different bandwidth within the predetermined frequency spectrum allocation or channel and handing over traffic to the second carrier.

Since non-terrestrial cellular networks can provide wide geographical coverage at lower cost than terrestrial networks (especially for uninhabited areas), a desirable feature of non-terrestrial cellular networks is the ability to provide emergency calling or messaging services. However, some implementations of a non-terrestrial cellular network are configured to use the same frequency bands as a terrestrial cellular network, with the intention that they would only be used to provide coverage where no terrestrial cellular network exists. If these non-terrestrial cellular networks provided overlapping geographical coverage with the terrestrial cellular network, interference would result. This limits the geographical coverage for such non-terrestrial cellular networks to provide emergency calling or messaging services. It is desirable for a non-terrestrial cellular network operating in the same frequency band as a terrestrial cellular network to provide emergency calling or messaging services over wider geographical coverage.

US2010/015971, in accordance with its abstract, describes a communications system includes a first wireless communications system configured to provide wireless communications over a first frequency band, and a second wireless communications system configured to provide wireless communications using at least a portion of the first frequency band. The system includes an inter-system communications link between the first wireless communications system and the second wireless communications system. The inter-system communications link is used to coordinate the use of the first frequency band. The system further includes an interference reducer configured to reduce interference between the first wireless communications system and the second wireless communications system. Related methods are also disclosed.

US2019/355237, in accordance with its abstract, describes methods of issuing an emergency alert in a geographical area serviced by a Mobile Satellite Service (MSS) satellite and a terrestrial Broadband Wireless Access (BWA) base station are provided. A method includes receiving a first emergency alert message from the MSS satellite by a user equipment in the geographical area using a first radio frequency band, and receiving a second emergency alert message from the terrestrial BWA base station by the user equipment in the geographical area using a second radio frequency band. Related devices and systems are provided.

WO2022/178797, in accordance with its abstract, describes a UE in one of an RRC idle mode or an RRC inactive mode may generate an emergency message including one or more of GPS coordinates, a timestamp, a UE ID, a personal ID of a user of the UE, an emergency level, or an emergency type, and transmit the emergency message to an NR-NTN. The emergency message may be transmitted in a dedicated time or frequency resource. The base station may receive the emergency message from the UE and forward the UE information to a network.

### Summary of the Disclosure

Against this background, the present disclosure provides a method for handling an emergency signal to (or at) a first network operated as a non-terrestrial cellular network according to claim 1, a computer program as defined by claim 14 and a controller in line with claim 15. Other preferred features are disclosed with reference to the claims and in the description below.

**It** is noteworthy that the non-terrestrial cellular network operates on the same frequency as a second network, operated as a terrestrial cellular network. Additionally or alternatively, the non-terrestrial cellular network causes interference to the second, terrestrial network, at least in respect of a part of the geographical coverage of the first and/or second cellular networks. As a result, simultaneous operation of the two cellular networks is preferably avoided. This makes handling of the emergency signal (to initiate an emergency call or other type of emergency message or transmission) difficult.

The approach of the present disclosure operates the first network in a lower activity (minimal) configuration. As a result, interference from the first network to the second network permits normal operation of the second network. It will be understood that this does not necessarily mean that there is no interference from the first network to the second network. However, the first network is advantageously configured to listen for any emergency signals. Emergency signalling typically uses a Random Access Channel (RACH) of a cellular network.

When an emergency signal is received at the first network, the first network is set to an higher activity (operative) configuration, different from the lower activity (minimal) configuration. The higher activity (operative) configuration causes more interference to the second network, but advantageously allows handling of the emergency signal in order to provide a cellular network service to the user equipment that sent the emergency signal. This approach can be implemented in software and/or hardware, for example as a controller or as an access node (for example, a base station, cell, eNB or gNB or the first network).

By keeping the first network in the lower activity (minimal) configuration until an emergency signal is received, the interference to the second network can be managed and mitigated. Once the first network is in the higher activity (operative) configuration, the interference may be difficult to manage or mitigate, but this only occurs in an emergency situation. The higher activity (operative) configuration may include sending a Random Access (or RACH) Response (RAR) message from the first network.

The non-terrestrial cellular network is preferably made from a high altitude platform (HAP) or satellite (which may be considered a type of HAP). The downlink transmissions from the first network are beneficially made from a non-terrestrial transmission system having an antenna system that defines a plurality of beams. In particular, the beams may provide separate geographical coverage areas. Existing techniques for handling provision of cells through one or more beams (as discussed above) are optionally used.

When the first network is operating in the lower activity (minimal) configuration and listening for any emergency signals, the listening may take place in a predetermined bandwidth. This predetermined bandwidth may be less than a bandwidth used by the second network. The listening preferably uses all the beams.

In a first approach, the lower activity (minimal) configuration comprises transmitting minimum downlink control signalling from the first network. For example, such minimum downlink control signalling may comprises one or more of: cell-specific or common reference signals (CRS); a master information block (MIB) and/or system information block (SIB). The minimum downlink control signalling may use up to 6 Physical Resource Blocks (PRBs). Optionally, the same downlink control signalling is transmitted by more than one of the plurality of beams. In some cases, the minimum downlink control signalling may indicate that the first network is barred except for emergency access. Advantageously, the predetermined bandwidth for listening in the lower activity (minimal) configuration may be the same as the bandwidth in which the minimum downlink control signalling is transmitted. In this approach, the emergency signal may comprise a random access preamble message (for instance, a RACH MSG1 in a 5G RAN).

In a second approach, the lower activity (minimal) configuration typically comprises transmitting less than the minimum information specified by 3GPP standards under release 17 (and optionally under Release 18 as specified by February 2023). making insufficient downlink transmissions from the first network to allow the user equipment to synchronise with the first network. Preferably, no downlink transmissions are made from the first network. Nevertheless, the first network is advantageously configured to listen for an emergency signal. The predetermined bandwidth for this listening may differ between geographical regions (for example, countries). The emergency signal may comprise a predefined random access (or RACH) message, in particular indicating an emergency. The emergency signal may be in an existing or new format and/or the emergency signal may be coded with a Zadoff-Chu sequence. A transmission frequency and/or bandwidth for the emergency signal may differs between geographical regions (in particular to match the first network listening). When the first network is activated (to the higher activity or operative configuration) transmission of downlink control signalling from the first network may be activated. For instance, this could include transmitting minimum downlink control signalling (for example, CRS and/or MIB and/or SIB transmission). Additionally or alternatively, the downlink control signalling may permit the user equipment to synchronise with the first network. In implementations, the downlink control signalling is only transmitted on the beam covering the geographical area corresponding with the emergency signal (for example, the beam on which the emergency signal was received).

### Brief Description of the Drawings

The approach of the disclosure may be put into practice in various ways, one of which will now be described by way of example only and with reference to the accompanying drawings in which:
Figure 1 shows a schematic architecture for an exemplary non-terrestrial cellular RAN;
Figure 2 schematically depicts transmissions in the frequency spectrum according to an example;
Figure 3 illustrates a flow chart of network operation according to a first embodiment;
Figure 4 illustrates a flow chart of network operation according to a second embodiment; and
Figure 5 shows an exemplary message structure for a random access channel message.

### Detailed Description of Preferred Embodiments

A significant issue in operating any cellular network (whether terrestrial or non-terrestrial) is the requirement to transmit downlink signals continuously or at regular intervals. For example, standards set by the Third Generation Partnership Project (3GPP) require a 4G network to transmit a Cell-specific or Common Reference Signal (CRS) over the whole carrier bandwidth, even if the cell is unused. The standards also require transmission of Master Information Blocks (MIB) and System Information Blocks (SIB). The channel bandwidth for a cell defined in the existing 3GPP Standards are 1.4, 3, 5, 10, 15 and 20 MHz. Similar constraints are implemented in 5G (also termed New Radio, NR). The channel bandwidths allowed currently depend on the operating band, for instance, see 3GPP Technical Specification (TS) 36.101, Table 5.6.1-1: E-UTRA channel bandwidth.

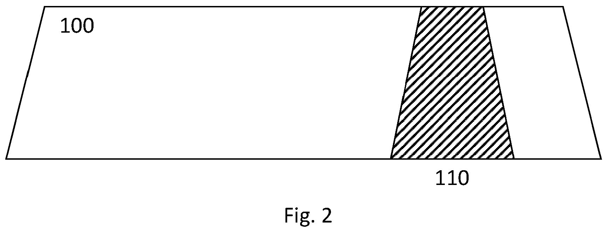

Referring to Figure 2, there are schematically depicted transmissions in the frequency spectrum according to an example. Specifically, there is shown a bandwidth allocation for a cell 100. Within the bandwidth allocation (or channel) 100, there is transmitted a carrier 110. In this example, the carrier 110 has a minimal bandwidth of 1.4 MHz. In fact, the minimum number of CRS and MIB/SIB to be transmitted according to 3GPP standards would require 6 Physical Resource Blocks (PRBs), occupying 1.08 MHz.

It has been recognised that minimising the downlink transmissions from the non-terrestrial cellular network may be sufficient to allow the non-terrestrial cellular network to provide emergency calling and/or messaging services on the same frequency (and in the same geographical coverage area) as a terrestrial cellular network. The non-terrestrial cellular network is mainly configured to listen for an emergency signal (RACH preamble or similar) in a certain bandwidth, typically a restricted bandwidth, which may be smaller in size than the bandwidth used by the terrestrial cellular network. During such a configuration with lower activity, interference to the terrestrial cellular network is minimised, so the terrestrial cellular network might experience some external interference (from the non-terrestrial cellular network), but the Key Performance Indicators (KPIs) of the terrestrial cellular network would be normal (within acceptable operating levels) and would typically not prevent use of the terrestrial cellular network. Only once an emergency signal from a user equipment has been received at the non-terrestrial cellular network, will the non-terrestrial cellular network transmit more than the minimum downlink transmissions.

In general terms, there may be considered a method for handling an emergency signal to (or at) a first network operated as a non-terrestrial cellular network. The first network operates on a same frequency as a second network that is operated as a terrestrial cellular network. The method comprises: operating the first network in a "minimal configuration" or "lower activity configuration", in which interference from the first network to the second network permits normal operation of the second network; and in response to receiving the emergency signal from a user equipment at the first network, setting the first network to an "operative configuration" or "higher activity configuration". The higher activity (operative) configuration causes increased interference from the first network to the second network compared with in the lower activity (minimal) configuration.

The method may be implemented in the form of a computer program, for example comprising instructions that, when executed by a processor controlling operation of a first network operated as a non-terrestrial cellular network, cause the processor to perform the method. Additionally or alternatively, the method may be implemented as a controller for a first network operated as a non-terrestrial cellular network. The controller is configured to perform the method. The controller may be located on a satellite or other HAP, but more typically is located terrestrially. An access node (for example, cell, base station, eNB or gNB) comprising the controller may also be considered. The access node may comprise the combination of a terrestrial portion (for example, a baseband system) and non-terrestrial portion (on a satellite or other HAP), which may comprise a radio frequency (RF) system.

A non-terrestrial transmission system may be configured to make the downlink transmissions. The non-terrestrial transmission system may have an antenna system that defines a plurality of beams, for example such that the beams provide separate geographical coverage areas. The non-terrestrial transmission system may also comprise an RF system, for instance.

Operating the first network in the lower activity (minimal) configuration may include listening at the first network for any emergency signals in a predetermined bandwidth. For instance, the predetermined bandwidth may be less than a bandwidth used by the second network.

Specific details of preferred embodiments will now be discussed. Further reference to this general sense of the disclosure will be made again below.

Two particular approaches are proposed, both of which assume that the non-terrestrial cellular network and the terrestrial cellular network are both generally compliant with 3GPP standards (subject to a small modification proposed in the second approach). In the first approach, the non-terrestrial cellular network is operated similarly to an inactive cell. The minimum carrier bandwidth is used, which for example for Band 8 (900 MHz GSM) is 1.4MHz. The non-terrestrial cellular network can then be operated in accordance with existing 3GPP standards. Existing (or new) emergency messaging and/or service provision can be employed.

In a second approach, the non-terrestrial cellular network downlink transmissions are further reduced, preferably to zero. A new type of emergency signal may then be used to activate the non-terrestrial cellular network.

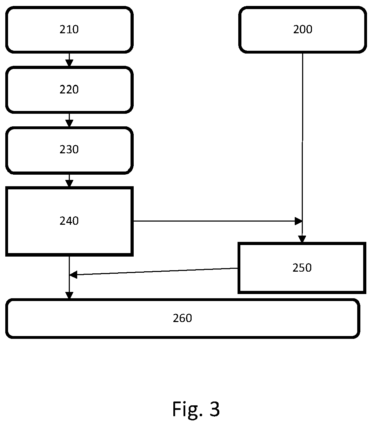

These approaches will be discussed individually below. Referring to Figure 3, there is illustrated a flow chart of network operation according to the first embodiment or approach. In this exemplary embodiment, the first network is provided via a satellite in a similar manner to that shown in Figure 1 (and as discussed above), but it will be understood that it can be implemented in a different manner (for example, with the baseband system in a different location and/or with any number of beams, including the possibility of only one beam) and/or with a different form of non-terrestrial network (for example, using a different type of HAP). In step 200, the first network (or more specifically the RAN or access nodes) is configured to operate in a lower activity (minimal) configuration.

In this minimal configuration (compliant with existing 3GPP standards), the first network transmits minimum CRS/MIB and SIB downlink messaging in a 3GPP LTE frequency band. As noted above, for many frequency bands it is possible to have a carrier of 1.4 MHz minimum bandwidth. MIB and SIB carry all the parameters of the cell. Including MIB and SIB1/SIB2 allows RACH parameters to be decoded. An example of this is provided below.

```
BCCH-DL-SCH-Message
         message: c1 (0)
            c1: systemlnformationBlockType1 (1)
              systemInformationBlockType1
                cellAccessRelatedlnfo
                   plmn-IdentityList: 1 item
                   ....
                   cellBarred: barred (0)
                               ....
       ac-Barringlnfo
            ...1 .... ac-BarringForEmergency: True
            ac-BarringForMO-Signalling
              ac-BarringFactor: p00 (0)
              ac-BarringTime: s4 (0)
              ac-BarringForSpecialAC: 10000 (bitmap)
            ac-BarringForMO-Data
              ac-BarringFactor: p00 (0)
              ac-BarringTime: s4 (0)
              ac-BarringForSpecialAC: 00000 (bitmap)
```

Optionally, this minimum downlink transmission can be made in 6 PRB (1.08 MHz) by transmitting only the portions of the signal that include SIB information. A reduced approach of this form is not currently specified in 3GPP standards, which required CRS transmission across the entire carrier bandwidth. However, it is understood that transmitting the CRS only in the portions of the signal that include SIB information (together with the SIB) will operate correctly. This lower activity (minimal) configuration has an interference impact across 1 MHz for the second, terrestrial network (sharing the same frequency band as the first network). To minimise the difficulty in configuring the first network in this form, the same Cell ID can be used for multiple (or all) beams. This may also have the advantage of reducing the bandwidth required between the baseband system 30 (and/or gateway antenna unit 50) and the satellite 10 (as a single signal can be transmitted for all the beams).

Optionally, to serve only emergency calls, the cell or cells of the first network can be barred except for emergency calls, so only emergency calls can be initiated (as specified in 3GPP TS 36.331 with cellbarred and ac-BarringForEmergency being controlled). In theory, if only emergency calls are allowed, existing 4G and 5G are only specified to allow VoLTE calls. Existing network design does not permit transmission of an emergency data message (for example, a SMS).

The RACH is also configured to use the same minimum bandwidth (for example, the 6 PRBs as used in the downlink). The first network is configured to listen in all the cells in the RACH (for instance, the 6 PRBs as configured). Listening in only this bandwidth also has the benefit of reducing the bandwidth required between the satellite and the baseband system 30 (and/or gateway antenna unit 50).

In parallel, in a first UE step 210, the UE is located in a satellite coverage area. In a second UE step 220, the UE listens to the MIB/SIB of the first network. In a third UE step 230, the UE receives from its user a command to make an emergency call. In response, a fourth UE step 240 takes place, in which the UE sends RACH message 1 on the RACH of the first network, as specified by 3GPP standards (this message will be discussed further below), identifying a cause of an emergency call.

Since the first network operating in its lower activity (minimal) configuration 200 is listening on the RACH (which is in the bandwidth in which the CRS/MIB and SIB are transmitted), the RACH message 1 is received by one of the beams at the first network. The RACH message 1 comprises a RACH preamble. Reception and detection of the RACH preamble at the first network causes the first network to set itself into a higher activity (operative) configuration 250. In response, the first network transmits a RACH Access Response (RAR) message in the downlink (RACH message 2), but only in the beam in which the RACH preamble was detected.

Communication between the UE and first network then continues as normal 260, since the first network is now more operative. This allows the call to proceed.

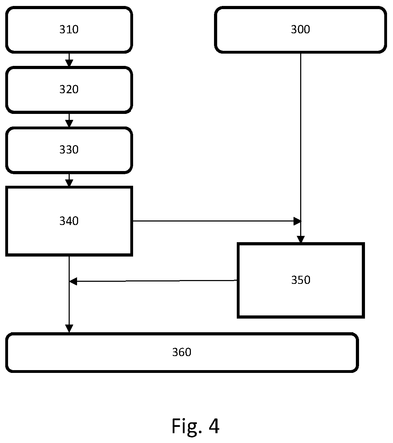

Referring next to Figure 4, there is illustrated a flow chart of network operation according to a second embodiment or approach. As with the first approach, this exemplary embodiment is discussed with reference to the first network provided via a satellite in a similar manner to that shown in Figure 1. Again, it will be understood that the first network can be implemented in a different manner and/or with a different form of non-terrestrial network, as discussed above.

In step 300, the first network (or more specifically the RAN or access nodes) is configured to operate in a lower activity (minimal) configuration. In this lower activity (minimal) configuration (which is not compliant with existing 3GPP standards), the first network transmits nothing in the downlink (for example, no CRS/MIB and SIB ). Instead, the first network is configured only to listen for a message from a UE requesting an emergency communication (a "RACH special message"). Specifically, the first network listens at a predefined frequency and bandwidth across all cells. Listening only in the minimum bandwidth also has the benefit of reducing the bandwidth required between the satellite and the baseband system 30 (and/or gateway antenna unit 50). The first network desirably listens in all the coverage area where the emergency communications can be served.

In parallel, in a first UE step 310, the UE is located in a satellite coverage area and preferably outside the coverage of the second, terrestrial network. In a second UE step 320, the UE sets itself with a predefined configuration that allows RACH transmissions to the first network (satellite). In a third UE step 330, the UE receives from its user a command to make an emergency call.

In response, a fourth UE step 340 takes place, in which the UE sends the "RACH special message" (a proprietary RACH message). Since this is a proprietary message (although it could be standardized in the future), it is not constrained by existing 3GPP standards, and could request a VoLTE emergency call, an 'emergency SMS' or an 'emergency short data session'. In this case, the procedure is proprietary in the sense that it is only initiated by the UE when there is a requirement for an emergency communication. The message is pre-defined and only used for initiating emergency communication. The format of such a message will be discussed below. The frequency and bandwidth to be used is advantageously pre-configured (per country) in the Operating System of the UE. The frequency used could be a 3GPP LTE/5G band or a proprietary band.

Since the first network operating in its lower activity (minimal) configuration 300 is listening in the predetermined frequency and bandwidth for which the UE is configured to transmit the "RACH special message", it is received by one of the beams at the first network. The "RACH special message" comprises a RACH preamble. Reception and detection of the RACH preamble at the first network causes the first network to set itself into a higher activity (operative) configuration 350. In this configuration, the first network initiates transmission of the minimum CRS/MIB and SIB downlink messaging and in the minimum possible bandwidth (typically 1.4 MHz or 5 MHz depending on the band), and transmits a RACH Access Response (RAR) message in the downlink (RACH message 2, as specified by 3GPP standards). These may happen simultaneously and only in the beam in which the RACH preamble was detected.

Communication between the UE and first network then continues as normal 360, since the first network is now more operative. However, the UE will desirably synchronise in the first network downlink before send the RACH message 3, as defined by 3GPP standards. This then allows the call to proceed.

Returning to the general sense of the disclosure discussed above, further optional and/or advantageous details may be considered. For example, in some embodiments, operating the first network in the lower activity (minimal) configuration comprises transmitting minimum downlink control signalling from the first network. Minimum downlink control signalling may comprise one or more of: cell-specific or common reference signals (CRS); a master information block (MIB) and/or system information block (SIB, for example SIB1 and/or SIB2); and 6 physical resource blocks (PRBs). Typically, CRS, MIB and SIB are all required within 6 PRBs. Operating the first network in the lower activity (minimal) configuration beneficially comprises listening at the first network for any emergency signals in the same bandwidth in which the minimum downlink control signalling is transmitted (for instance, in the 6 PRBs).

Preferably, the same downlink control signalling is transmitted by more than one of the plurality of beams. Optionally, the minimum downlink control signalling indicates that the first network is barred except for emergency access. This may further restrict usage of the first network. Advantageously, the emergency signal comprises a random access preamble message (for example, a 3GPP RACH message 1).

In other embodiments, operating the first network in the lower activity (minimal) configuration comprises making insufficient downlink transmissions from the first network to allow the user equipment to synchronise with the first network. For example, this may include making no downlink transmissions from the first network or very limited transmissions (for instance, identifying the presence of the network and/or indicating that it is for use as in emergencies only). In this case, the emergency signal preferably comprises a predefined random access message indicating an emergency. Operating the first network in the lower activity (minimal) configuration beneficially comprises listening in a predefined bandwidth (preferably for all beams). Optionally, a transmission frequency and/or bandwidth for the emergency signal (corresponding with a bandwidth in which the first network is listening) differs between geographical regions. The first network may therefore listen in different frequencies and/or bandwidths on different beams.

In such cases, the higher activity (operative) configuration may comprise activating transmission of downlink control signalling from the first network. For example, the downlink control signalling from the first network may be minimum downlink control signalling. Minimum downlink control signalling may comprise one or more of: cell-specific or common reference signals (CRS); a master information block (MIB) and/or system information block (SIB, for example SIB1 and/or SIB2); and 6 physical resource blocks (PRBs). Advantageously, the downlink control signalling permits the user equipment to synchronise with the first network. The downlink control signalling may only be transmitted on a beam providing a geographical coverage area corresponding with the emergency signal (for example, the beam on which the emergency signal was received).

In any approach, the higher activity (operative) configuration may comprise sending a Random Access Response message from the first network in response to the emergency signal.

Additional reference to the general sense of the disclosure will be made once more below. Further details of specific embodiments will be discussed first.

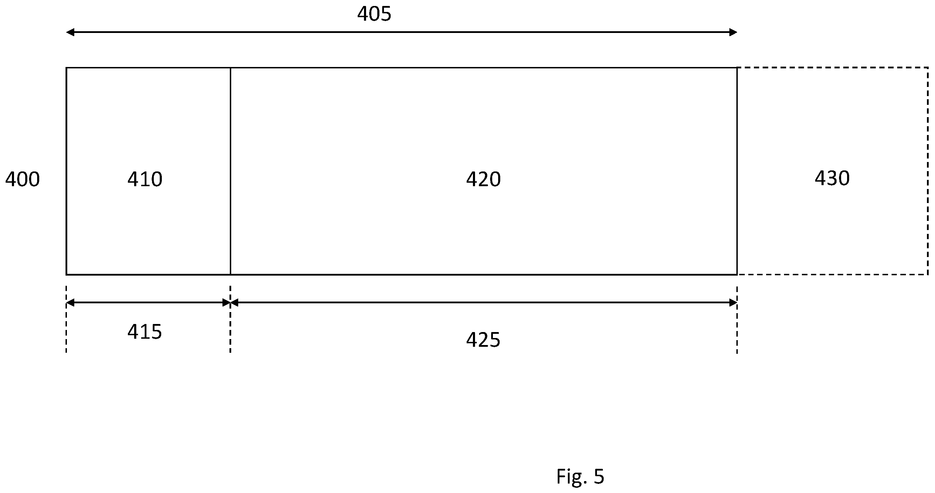

In this respect, Figure 5 shows an exemplary message structure for a random access channel message. Specifically, the RACH preamble 400 is shown, which is the first message sent to start a call (or other communication). The Physical RACH (PRACH) transmission (PRACH preamble) is an OFDM-based signal, but it is generated using a different structure from other uplink transmissions. Most notably, it uses narrower subcarrier spacing. As a result, it is typically not orthogonal to the Physical Uplink Shared Channel (PUSCH), Physical Uplink Control Channel (PUCCH) and Sounding Reference Signal (SRS). Therefore, those channels may suffer from some interference from the PRACH. However, the subcarrier spacing used by the PRACH is an integer submultiple of the spacing used for the other channels and therefore the PUSCH, PUCCH and SRS do not interfere on the PRACH.

The message comprises: a Cyclic Prefix (CP) 410, as any other OFDM signal; followed by a sequence 420. The CP 410 has a first time duration (T_{CP}) 415 and the sequence 420 has a second time duration (T_{SEQ}) 425. The preamble sequence length 405 is also shown. Optionally, a guard period 430 may follow the sequence 420.

The sequence 420 defined by existing 3GPP standards is one of 64 defined sequences. These are based on Zadoff-Chu sequences. This is a complex-valued mathematical sequence which, when applied to a signal, gives rise to a new signal of constant amplitude. When cyclically shifted versions of a Zadoff-Chu sequence are imposed upon a signal, the resulting set of signals detected at the receiver are uncorrelated with one another.

The RACH preamble (first RACH message) for the first approach would typically follow this format, with parameters as defined by existing 3GPP standard. There are many options for a RACH preamble (first RACH message) for the second approach. One option to follow a similar approach as 3GPP 4G standards, for instance using Zadoff-Chu sequences to have good performance for correlation of signals, but with different input parameters. For example, parameters that may be varied may be the total bandwidth used and/or a subcarrier spacing parameter.

Returning to the general sense of the disclosure, further considerations of the emergency signal may include that: the emergency signal is a random access or RACH message, for instance a RACH preamble message; that it may comprise or be coded with a Zadoff-Chu sequence; and that it comprises a cyclic prefix (at the start of the message) and/or a guard period (at the end of the message).

Although a specific embodiment has now been described, the skilled person will understand that various modifications and variations are possible. Also, combinations of any specific features shown with reference to one embodiment or with reference to multiple embodiments are also provided, even if that combination has not been explicitly detailed herein. For example, the specific architecture of Figure 1 is only an example and alternative architectures are possible. The baseband may be implemented differently to that discussed and other interfaces may be employed. Alternative implementations may include the first network in the lower activity (minimal) configuration, transmitting something in the downlink, but not a minimal downlink control signalling (for instance, enough to identify the network and/or determine frequency and/or format for the emergency signal). Different types of emergency (RACH) messages may also be considered.

Where the disclosure is implemented as a computer program, it may be implemented on a computer system. Such a computer system may include a processor or processors (e.g. local, virtual or cloud-based) such as a Central Processing unit (CPU), and/or a single or a collection of Graphics Processing Units (GPUs). The processor may execute logic in the form of a software program. The computer system may include a memory including volatile and non-volatile storage medium. A computer-readable medium may be included to store the logic or program instructions. The different parts of the system may be connected using a network (e.g. wireless networks and wired networks). The computer system may include one or more interfaces. The computer system may contain a suitable operating system such as Java, UNIX, Windows (RTM) or Linux, for example.

An implementation according to the disclosure may comprise hardware and/or software, for example a computer system and/or generic or bespoke hardware. This may be implemented as a controller as part of a network element within standard cellular network architecture and/or in a network element separate from existing architecture.

Throughout the description and claims of this specification, the words "comprise" and "contain" and variations of them mean "including but not limited to", and they are not intended to (and do not) exclude other components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

The scope of the invention is defined by the appended claims.

## Claims

1. A method for handling an emergency signal to a first network operated as a non-terrestrial cellular network, the first network operating on a same frequency as a second network, operated as a terrestrial cellular network, the method comprising:
operating the first network in a lower activity configuration (200, 300), in which interference from the first network to the second network permits normal operation of the second network; and
in response to receiving the emergency signal from a user equipment at the first network, setting the first network to a higher activity configuration (250, 350), causing increased interference from the first network to the second network than in the lower activity configuration.

2. The method of claim 1, wherein downlink transmissions from the first network are made from a non-terrestrial transmission system having an antenna system that defines a plurality of beams, such that the beams provide separate geographical coverage areas.

3. The method of claim 1 or claim 2, wherein operating the first network in the lower activity configuration comprises listening at the first network for any emergency signals in a predetermined bandwidth, the predetermined bandwidth being less than a bandwidth used by the second network.

4. The method of any preceding claim, wherein operating the first network in the lower activity configuration comprises transmitting minimum downlink control signalling from the first network.

5. The method of claim 4, wherein the minimum downlink control signalling comprises one or more of:
cell-specific or common reference signals;
a master information block and/or system information block; and
6 physical resource blocks.

6. The method of claim 4 or claim 5 when dependent on claim 2, wherein the same downlink control signalling is transmitted by more than one of the plurality of beams.

7. The method of any one of claims 4 to 6, wherein one or more of:
the minimum downlink control signalling indicates that the first network is barred except for emergency access;
operating the first network in the lower activity configuration comprises listening at the first network for any emergency signals in the same bandwidth in which the minimum downlink control signalling is transmitted; and
the emergency signal comprises a random access preamble message.

8. The method of any one of claims 1 to 3, wherein operating the first network in the lower activity configuration comprises making insufficient downlink transmissions from the first network to allow the user equipment to synchronise with the first network.

9. The method of claim 8, wherein the emergency signal comprises a predefined random access message indicating an emergency.

10. The method of claim 9, wherein one or more of:
a transmission frequency and/or bandwidth for the emergency signal differs between geographical regions; and
the emergency signal is coded with a Zadoff-Chu sequence.

11. The method of claim 9 or claim 10, wherein the higher activity configuration comprises activating transmission of downlink control signalling from the first network.

12. The method of claim 11, wherein one of more of:
the downlink control signalling from the first network is minimum downlink control signalling;
the downlink control signalling permits the user equipment to synchronise with the first network; and
downlink transmissions from the first network are made from a non-terrestrial transmission system having an antenna system that defines a plurality of beams, such that the beams provide separate geographical coverage areas, the downlink control signalling only being transmitted on a beam providing a geographical coverage area corresponding with the emergency signal.

13. The method of any preceding claim, wherein the higher activity configuration comprises sending a Random Access Response message from the first network in response to the emergency signal.

14. A computer program comprising instructions that, when executed by a processor controlling operation of a first network operated as a non-terrestrial cellular network, cause the processor to perform the method of any preceding claim.

15. A controller for a first network operated as a non-terrestrial cellular network, the controller being configured to perform the method of any one of claims 1 to 13.

## Patentansprüche

1. Verfahren zum Handhaben eines Notrufsignals an ein erstes Netz, das als ein nicht-terrestrisches zellulares Netz betrieben wird, wobei das erste Netz auf einer selben Frequenz wie ein zweites Netz betrieben wird, das als ein terrestrisches zellulares Netz betrieben wird, wobei das Verfahren umfasst:
Betreiben des ersten Netzes in einer Konfiguration für geringere Aktivität (200, 300), in der Interferenzen von dem ersten Netz in dem zweiten Netz den regulären Betrieb des zweiten Netzes zulassen; und
infolge des Empfangs des Notrufsignals von einem Benutzergerät an dem ersten Netz, Einstellen des ersten Netzes auf eine Konfiguration für höhere Aktivität (250, 350), wodurch in dem zweiten Netz stärkere Interferenzen von dem ersten Netz als bei der Konfiguration für geringere Aktivität entstehen.

2. Verfahren nach Anspruch 1, wobei Abwärtsstreckenübertragungen von dem ersten Netz über ein nicht-terrestrisches Übertragungssystem mit einem Antennensystem erfolgen, das eine Vielzahl von Strahlen definiert, derart, dass die Strahlen separate geografische Versorgungsgebiete vorsehen.

3. Verfahren nach Anspruch 1 oder Anspruch 2, wobei das Betreiben des ersten Netzes in der Konfiguration für geringere Aktivität umfasst, dass an dem ersten Netz auf Notrufsignale in einer vorab bestimmten Bandbreite überwacht wird, wobei die vorab bestimmte Bandbreite geringer ist als eine von dem zweiten Netz verwendete Bandbreite.

4. Verfahren nach einem vorstehenden Anspruch, wobei das Betreiben des ersten Netzes in der Konfiguration für geringere Aktivität umfasst, dass minimale Abwärtsstreckensteuerungssignale von dem ersten Netz übertragen werden.

5. Verfahren nach Anspruch 4, wobei die minimalen Abwärtsstreckensteuerungssignale eines oder mehrere umfassen von:
zellspezifische oder gemeinsame Referenzsignale;
einen Masterinformationsblock und/oder Systeminformationsblock; und
6 physische Ressourcenblöcke.

6. Verfahren nach Anspruch 4 oder Anspruch 5, sofern abhängig von Anspruch 2, wobei dasselbe Abwärtsstreckensteuerungssignal von mehr als einem der Vielzahl an Strahlen übertragen wird.

7. Verfahren nach einem der Ansprüche 4 bis 6, wobei:
das minimale Abwärtsstreckensteuerungssignal angibt, dass das erste Netz außer für den Notzugriff gesperrt ist;
das Betreiben des ersten Netzes in der Konfiguration für geringere Aktivität umfasst, dass an dem ersten Netz auf Notrufsignale in derselben Bandbreite überwacht wird, in der die minimalen Abwärtsstreckensteuerungssignale übertragen werden; und/oder
das Notrufsignal eine Zufallszugriffspräambelnachricht umfasst.

8. Verfahren nach einem der Ansprüche 1 bis 3, wobei das Betreiben des ersten Netzes in der Konfiguration für geringere Aktivität umfasst, dass unzureichende Abwärtsstreckenübertragungen aus dem ersten Netz erfolgen, damit sich das Benutzergerät mit dem ersten Netz synchronisieren kann.

9. Verfahren nach Anspruch 8, wobei das Notrufsignal eine vordefinierte Zufallszugriffsnachricht umfasst, die auf einen Notfall hinweist.

10. Verfahren nach Anspruch 9, wobei:
sich eine Übertragungsfrequenz und/oder Bandbreite für das Notrufsignal zwischen geografischen Regionen unterscheidet; und/oder
das Notrufsignal mit einer Zadoff-Chu-Folge codiert ist.

11. Verfahren nach Anspruch 9 oder Anspruch 10, wobei die Konfiguration für höhere Aktivität umfasst, dass die Übertragung von Abwärtsstreckensteuerungssignalen von dem ersten Netz aktiviert wird.

12. Verfahren nach Anspruch 11, wobei:
es sich bei den Abwärtsstreckensteuerungssignalen von dem ersten Netz um minimale Abwärtsstreckensteuerungssignale handelt;
die Abwärtsstreckensteuerungssignale zulassen, dass sich das Benutzergerät mit dem ersten Netz synchronisiert; und/oder
Abwärtsstreckenübertragungen von dem ersten Netz über ein nicht-terrestrisches Übertragungssystem mit einem Antennensystem erfolgen, das eine Vielzahl von Strahlen definiert, derart, dass die Strahlen separate geografische Versorgungsgebiete vorsehen, wobei die Abwärtsstreckensteuerungssignale nur auf einem Strahl übertragen werden, der ein dem Notrufsignal entsprechendes geografisches Versorgungsgebiet vorsieht.

13. Verfahren nach einem vorstehenden Anspruch, wobei die Konfiguration für höhere Aktivität umfasst, dass infolge des Notrufsignals eine Zufallszugriffsantwortnachricht von dem ersten Netz gesendet wird.

14. Computerprogramm umfassend Anweisungen, die bei Ausführung durch eine Verarbeitungseinheit, die den Betrieb eines ersten Netzes steuert, das als ein nicht-terrestrisches zellulares Netz betrieben wird, veranlassen, dass die Verarbeitungseinheit das Verfahren nach einem vorstehenden Anspruch durchführt.

15. Steuereinheit für ein erstes Netz, das als ein nicht-terrestrisches zellulares Netz betrieben wird, wobei die Steuereinheit zum Durchführen des Verfahrens nach einem der Ansprüche 1 bis 13 konfiguriert ist.

## Revendications

1. Procédé de gestion d'un signal d'urgence sur un premier réseau exploité en tant que réseau cellulaire non terrestre, le premier réseau fonctionnant sur une même fréquence qu'un deuxième réseau, exploité en tant que réseau cellulaire terrestre, le procédé comprenant :
l'exploitation du premier réseau dans une configuration d'activité inférieure (200, 300), dans laquelle une interférence du premier réseau sur le deuxième réseau permet une exploitation normale du deuxième réseau ; et
en réponse à la réception du signal d'urgence à partir d'un équipement utilisateur au niveau du premier réseau, l'établissement du premier réseau à une configuration d'activité supérieure (250, 350), ce qui entraîne une interférence accrue du premier réseau sur le deuxième réseau par rapport à la configuration d'activité inférieure.

2. Procédé selon la revendication 1, dans lequel des transmissions en liaison descendante à partir du premier réseau sont effectuées à partir d'un système de transmission non terrestre ayant un système d'antenne qui définit une pluralité de faisceaux, de telle sorte que les faisceaux fournissent des zones de couverture géographiques séparées.

3. Procédé selon la revendication 1 ou la revendication 2, dans lequel l'exploitation du premier réseau dans la configuration d'activité inférieure comprend l'écoute du premier réseau à la recherche de signaux d'urgence dans une largeur de bande prédéterminée, la largeur de bande prédéterminée étant moindre qu'une largeur de bande utilisée par le deuxième réseau.

4. Procédé selon l'une quelconque des revendications précédentes, dans lequel l'exploitation du premier réseau dans la configuration d'activité inférieure comprend la transmission d'une signalisation de commande de liaison descendante minimale à partir du premier réseau.

5. Procédé selon la revendication 4, dans lequel la signalisation de commande de liaison descendante minimale comprend un ou plusieurs éléments parmi :
des signaux de référence spécifiques à une cellule ou communs ;
un bloc d'informations maître et/ou un bloc d'informations système ; et
6 blocs de ressources physiques.

6. Procédé selon la revendication 4 ou la revendication 5 lorsqu'elles dépendent de la revendication 2, dans lequel la même signalisation de commande de liaison descendante est transmise par plus d'un de la pluralité de faisceaux.

7. Procédé selon l'une quelconque des revendications 4 à 6, dans lequel s'appliquent un ou plusieurs des éléments suivants :
la signalisation de commande de liaison descendante minimale indique que le premier réseau est bloqué à l'exception d'un accès d'urgence ;
l'exploitation du premier réseau dans la configuration d'activité inférieure comprend l'écoute du premier réseau à la recherche de signaux d'urgence dans la même largeur de bande dans laquelle la signalisation de commande de liaison descendante minimale est transmise ; et
le signal d'urgence comprend un message de préambule d'accès aléatoire.

8. Procédé selon l'une quelconque des revendications 1 à 3, dans lequel l'exploitation du premier réseau dans la configuration d'activité inférieure comprend le fait d'effectuer des transmissions en liaison descendante insuffisantes à partir du premier réseau pour autoriser l'équipement utilisateur à se synchroniser avec le premier réseau.

9. Procédé selon la revendication 8, dans lequel le signal d'urgence comprend un message d'accès aléatoire prédéfini indiquant une urgence.

10. Procédé selon la revendication 9, dans lequel s'appliquent un ou plusieurs des éléments suivants :
une fréquence et/ou une largeur de bande de transmission pour le signal d'urgence diffèrent entre des régions géographiques ; et
le signal d'urgence est codé avec une séquence de Zadoff-Chu.

11. Procédé selon la revendication 9 ou la revendication 10, dans lequel la configuration d'activité supérieure comprend l'activation de la transmission de signalisation de commande de liaison descendante à partir du premier réseau.

12. Procédé selon la revendication 11, dans lequel s'appliquent un ou plusieurs des éléments suivants :
la signalisation de commande de liaison descendante à partir du premier réseau est une signalisation de commande de liaison descendante minimale ;
la signalisation de commande de liaison descendante permet à l'équipement utilisateur de se synchroniser avec le premier réseau ; et
des transmissions en liaison descendante à partir du premier réseau sont effectuées à partir d'un système de transmission non terrestre ayant un système d'antenne qui définit une pluralité de faisceaux, de telle sorte que les faisceaux fournissent des zones de couverture géographiques séparées, la signalisation de commande de liaison descendante étant uniquement transmise sur un faisceau fournissant une zone de couverture géographique correspondant au signal d'urgence.

13. Procédé selon l'une quelconque des revendications précédentes, dans lequel la configuration d'activité supérieure comprend l'envoi d'un message de réponse d'accès aléatoire à partir du premier réseau en réponse au signal d'urgence.

14. Programme informatique comprenant des instructions qui, lorsqu'elles sont exécutées par un processeur commandant l'exploitation d'un premier réseau exploité en tant que réseau cellulaire non terrestre, amènent le processeur à réaliser le procédé de l'une quelconque des revendications précédentes.

15. Dispositif de commande pour un premier réseau exploité en tant que réseau cellulaire non terrestre, le dispositif de commande étant configuré pour réaliser le procédé de l'une quelconque des revendications 1 à 13.
